# FASCICULE DE BREVET EUROPEEN

(11) **EP 3 261 857 B1**
(45) Date de publication et mention de la délivrance du brevet: **18.07.2018**
(21) Numéro de dépôt: 16704221.7
(22) Date de dépôt: 12.02.2016
(51) Int. Cl.: B60C 11/03, B60C 11/11

(54) **PNEUMATIQUE AVEC BANDE DE ROULEMENT DIRECTIONNELLE COMPORTANT DES BLOCS INCURVES POURVUS DE CHANFREINS**
REIFEN MIT RICHTUNGSGEBUNDENEM PROFIL MIT GEKRÜMMTEN BLÖCKEN MIT FASEN
TYRE WITH A DIRECTIONAL TREAD COMPRISING CURVED BLOCKS WITH CHAMFERS

(30) Priorité: 27.02.2015 FR 1500394
(43) Date de publication de la demande: 03.01.2018
(73) Titulaire: Compagnie Générale des Etablissements Michelin, 63000 Clermont-Ferrand (FR)
(72) Inventeur: MOSNIER, David, 63040 Clermont-Ferrand Cedex 9 (FR); MONTARRAS, Michel, 63040 Clermont-Ferrand Cedex 9 (FR); HYE, Yann, 63040 Clermont-Ferrand Cedex 9 (FR)
(74) Mandataire: Demaure, Pierre-Yves
(86) Numéro de dépôt international: PCT/EP2016/053049
(87) Numéro de publication internationale: WO 2016/134991

(56) Documents cités:
- EP-A1- 2 769 856
- FR-A1- 2 291 879
- GB-A- 2 240 522
- US-A- 1 127 517

## Description

### DOMAINE TECHNIQUE DE L'INVENTION

**La** présente invention concerne un pneumatique pourvu d'une bande de roulement directionnelle adaptée pour des conditions météorologiques hivernales impliquant par exemple des routes recouvertes de glace et/ou de neige, la bande de roulement étant pourvue d'une pluralité de blocs en forme de courbes alignés le long de la bande de roulement.

### ETAT DE LA TECHNIQUE ANTERIEURE

**Le** document US4057089 décrit un pneumatique comportant une bande de roulement pourvue d'une pluralité de blocs. Chacun de ces blocs est agencé en forme de courbe et s'étend du centre de la bande de roulement vers un des bords. Certains blocs sont agencés en forme de courbe en parabole du second degré. Les blocs sont reliés à une bande centrale. Les blocs étant relativement larges, la rigidité de ces mêmes blocs est par conséquent importante, ce qui entraîne une usure rapide de la bande de roulement. Le document GB2240522 décrit également un pneumatique selon le préambule de la revendication 1 comportant une bande de roulement directionnelle.

Le document WO2013/048682 concerne généralement des pneumatiques dont les bandes de roulement ont une configuration et/ou des propriétés adaptées à des conditions de sol enneigé, mais aussi pour un sol sec. Plus précisément, le document décrit un pneumatique ayant une bande de roulement avec une forte densité des lamelles dans la zone de contact, une fiable densité de rainures latérales ainsi qu'une valeur minimale de ratio de surface de contact longitudinale. Ces caractéristiques confèrent au pneumatique un bon compromis entre les caractéristiques de freinage sur sol enneigé et sur sol sec. Néanmoins, dans une perspective d'amélioration continuelle des niveaux de performances des pneumatiques, les concepteurs recherchent des solutions encore plus performantes, en particulier en regard des performances sur sol enneigé.

Pour pallier ces différents inconvénients, l'invention prévoit différents moyens techniques.

### EXPOSE DE L'INVENTION

Tout d'abord, un premier objet de l'invention consiste à prévoir une bande de roulement pour pneumatique permettant d'améliorer la durabilité d'une bande de roulement pourvue de blocs configurés selon des profils courbés.

Un autre objet de l'invention consiste à prévoir une bande de roulement permettant de maintenir un équilibre optimal entre le freinage sur sol sec et la transmission du couple moteur.

Un autre objet de l'invention consiste à obtenir un excellent compromis d'adhérence sur sol enneigé/sol mouillé en préservant les performances sur sol sec.

Pour ce faire, l'invention prévoit un pneumatique comportant une bande de roulement directionnelle, ladite bande de roulement comportant deux bords et un centre, cette bande de roulement comprenant une pluralité de blocs, chaque bloc s'étendant de manière continue selon une courbure globale C d'un des bords vers le centre de ladite bande de roulement en formant une extrémité centrale de bloc, chaque bloc présentant une largeur WB et une longueur LB, cette largeur augmentant de l'extrémité centrale de bloc en direction du bord, tout ou partie des blocs de la bande de roulement comprenant une incision médiane de longueur S, ladite incision médiane s'étendant selon une courbure C' sensiblement identique à la courbure C du bloc. Selon l'invention, chaque bloc comporte une zone centrale avec un angle β1 par rapport à la direction transversale (Y) tel que 35°≤β1≤65° une zone de bord avec un angle β3 tel que 0°≤β3≤10°, et une zone intermédiaire entre la zone centrale et la zone de bord avec un angle β2, et au moins un bloc comprend un chanfrein de bloc prévu au niveau du bord d'attaque et/ou du bord de fuite du bloc de ladite zone intermédiaire et/ou de ladite zone de bord, et en ce que ladite zone centrale est dépourvue de chanfrein.

Selon un mode de réalisation avantageux, les chanfreins de bloc sont agencés sur un bord de fuite du bloc.

La présence d'un chanfrein, en particulier sur le bord de fuite de ces zones favorise le freinage sur sol sec. Afin de maintenir un équilibre optimal entre le freinage sur sol sec et la transmission du couple moteur, il est souhaitable de limiter les réductions de surface de contact avec le sol. Ce critère est avantageusement respecté en omettant ou supprimant le chanfrein le long de la zone centrale. Ainsi, en prévoyant des chanfreins uniquement sur la zone de bord du bloc et la zone intermédiaire du bloc, on améliore le freinage sur sol sec, sans trop réduire la surface de contact. Par ailleurs, puisque la zone intermédiaire est agencée avec un angle important par rapport à la direction transversale (y), la présence d'un chanfrein le long de cette zone aurait un effet limité sur les performances de freinage sur sol sec.

Selon un mode de réalisation avantageux, au moins une partie des incisions médianes comporte un chanfrein d'incision.

Le chanfrein d'incision est avantageusement localisé dans la zone intermédiaire.

De manière avantageuse, au moins une partie des incisions médianes comprend des moyens de rigidification reliant, pour chaque incision, les faces opposées de cette incision.

Les moyens de rigidification sont de préférence agencés dans l'incision selon des intervalles de 5 à 20 mm.

De manière avantageuse, dans au moins une incision, l'espacement entre les moyens de rigidification est variable.

Egalement de manière avantageuse, les moyens de rigidification sont venus de matière avec la bande de roulement.

Grâce aux moyens de rigidification, le freinage sol sec est encore une fois amélioré. En effet, cet agencement limite le basculement des deux demi-blocs séparés par l'incision médiane.

Selon un mode de réalisation, les chanfreins forment une paroi inclinée de sensiblement 45° par rapport à la surface de bande de roulement.

Selon un autre mode de réalisation, les chanfreins sont courbes.

Préférentiellement ces chanfreins sont à 45°, avec une section comprise entre 1x1 mm et 2x2 mm. En variante, ils peuvent aussi être constitué par un rayon (par exemple de 1 à 2 mm) se raccordant aux faces des blocs.

De manière avantageuse, la courbure C' de l'incision médiane est déterminée de sorte que le rapport de projections Sx/Sy correspond à 0,5≤ Sx/Sy ≤ 1,25, avec Sx désignant la projection de la longueur S de l'incision selon un axe circonférentiel X de la bande de roulement et Sy désignant la projection de cette longueur S selon un axe transversal Y de la bande de roulement.

Un tel arrangement permet d'obtenir un compromis avantageux entre les caractéristiques d'adhérence sur sol enneigé/sol mouillé sans perte de performance pour freinage sur sol sec. Ce gain est dû à l'effet couplé des arrêtes créées par les incisions et de leurs orientations qui ont un effet de frottement sur la neige et améliorent ainsi l'adhérence. La présence de l'incision ainsi que l'orientation de celle-ci permettent d'améliorer l'adhérence sur sol enneigé du fait des arrêtes. Par ailleurs, la zone d'interruption d'incision permet d'augmenter la rigidité selon l'axe X et d'améliorer le freinage sur sol sec.

Ce pneumatique est avantageusement prévu pour un usage toutes saisons.

Selon un mode de réalisation avantageux, tout ou partie des blocs de la bande de roulement comprennent une incision globalement circonférentielle agencée à l'extrémité de l'incision médiane opposée à l'extrémité centrale de bloc, ladite incision globalement circonférentielle s'étendant d'un bord à l'autre du bloc.

Cette incision favorise la mise à plat du pneumatique grâce au découplage créé. La rigidité en épaule est toutefois conservée pour permettre une bonne tenue en virage.

Selon un mode de réalisation avantageux, l'incision circonférentielle est en forme de V dont la pointe forme un angle α compris entre 100° et 170° et de préférence entre 150° et 170°. En variante, l'incision circonférentielle est en forme globale de « S ». Dans une autre variante, cette incision peut comprendre plusieurs petits segments tout en conservant une orientation globalement circonférentielle.

Selon un autre mode de réalisation avantageux, tout ou partie des blocs de la bande de roulement comprend une incision latérale agencée dans le prolongement de l'incision médiane et découplée de ladite incision médiane.

De manière avantageuse, l'incision latérale s'élargit à partir d'une certaine profondeur dans la bande de roulement, formant un élargissement d'incision, ledit élargissement d'incision débouchant sur l'épaule du pneumatique, au-delà du bord de la bande de roulement.

Cet élargissement d'incision permet de prolonger les caractéristiques favorables d'adhérence sur sol enneigé malgré l'usure des blocs, jusqu'à par exemple environ 3 mm de hauteur de bloc. Par ailleurs, le profil en forme de goutte d'eau permet de stocker de l'eau et favorise les performances sur sol mouillé.

Selon un autre mode de réalisation avantageux, au moins une partie des incisions médianes comprend des ponts de mélanges élastomères le long de l'incision. Les ponts sont particulièrement avantageux au niveau de la zone centrale, cette zone comportant l'angle le plus important par rapport à la direction transversale (Y).

Les ponts sont de préférence agencés à des intervalles de 15 à 20 mm. La hauteur de ces ponts est préférentiellement comprise entre 40 et 80% de la hauteur maxi des incisions.

Egalement de manière avantageuse, les blocs sont constitués d'une composition élastomère basée sur un élastomère diénique, un système plastifiant et un système d'inter-liaisons, dans lequel la composition élastomère comporte une température de transition vitreuse comprise entre -40°C et -15°C et un module de cisaillement G* mesuré à 60°C compris entre 0,5 MPa et 1,1 MPa.

Une telle composition permet une utilisation dans des conditions hivernales avec des températures très froides sans dégradation des performances.

En outre, les Demanderesses ont constaté, de manière surprenante, que la bande de roulement selon l'invention, avec un aspect général des blocs évoquant un pneumatique de type été, comporte des caractéristiques comportementales particulièrement avantageuses sur sol enneigé et/ou glacé. Les limites de ces performances sont encore repoussées favorablement avec l'utilisation des compositions préalablement décrites.

En outre, on observe des gains avantageux des performances lorsque la température de transition vitreuse de la composition élastomère est comprise entre -20°C et -30°C.

Le module de cisaillement G* est de préférence compris entre 0,9 MPa et 1 MPa.

### DESCRIPTION DES FIGURES

Tous les détails de réalisation sont donnés dans la description qui suit, complétée par les figures 1 à 4, présentées uniquement à des fins d'exemples non limitatifs, et dans lesquelles :
- la figure 1 est une représentation schématique d'une portion d'une bande de roulement correspondant sensiblement à l'aire de contact ;
- la figure 2 est une représentation schématique d'un bloc pour une bande de roulement telle que celle de la figure 1 ;
- la figure 3 montre une variante de réalisation du bloc de la figure 2 ;
- la figure 4 est une représentation schématique partielle d'une variante de réalisation de la bande de roulement de la figure 1 avec des ponts agencés le long des incisions.

### DESCRIPTION DETAILLEE DE L'INVENTION

### DEFINITIONS

Dans le présent document, par longueur curviligne « L » ou « S », on entend une longueur mesurée en prenant en compte la courbure de l'élément « L » ou « S » mesuré.

Par « sculpture directionnelle », on entend une sculpture de bande de roulement dont les éléments de sculpture sont spécifiquement agencés pour optimiser les caractéristiques comportementales en fonction d'un sens de rotation prédéterminé. Ce sens de rotation est classiquement indiqué par une flèche sur le flanc du pneumatique. Dans une telle architecture, les bords des éléments de sculpture qui sont vers la direction de roulage sont désignés par le terme « bord d'attaque », tandis que les bords des éléments de sculpture qui sont opposés à la direction de roulage sont désignés par le terme « bord de fuite ». De plus, une « sculpture directionnelle », est une sculpture impliquant un sens de roulage préférentiel tel que, lorsqu'on fait tourner le pneumatique dans ledit sens préférentiel, ce pneumatique offre des propriétés d'adhérences au sol meilleures que celles offertes lorsqu'on fait tourner ledit pneumatique dans l'autre sens. Une sculpture directionnelle est par exemple une sculpture comportant des motifs de forme générale en V.

Par « incision », on entend une découpe ou fente mince (entre 0,1 et 2 mm) et allongée pratiquée dans un bloc de bande de roulement.

Par « incision médiane dans le bloc », on entend que cette incision médiane sépare ce bloc en deux parties de bloc globalement identiques. La différence de surface entre ces deux parties de bloc étant inférieure à 10%, par surface on entend celle pouvant être en contact avec le sol dans l'aire de contact.

Par « incision latérale », on entend une incision qui s'étend globalement selon la direction transversale Y, l'angle formé par la direction d'extension de cette incision avec la direction transversale Y étant inférieure à 15 degrés, en valeur absolue.

Par « incision latérale découplée de l'incision médiane », on entend qu'il existe une zone de gomme entre l'incision latérale et l'incision médiane. La longueur de cette zone de gomme est d'au moins 2 mm.

Par « incision circonférentielle, on entend une incision qui s'étend globalement selon la direction circonférentielle X, l'angle formé par la direction d'extension de cette incision avec la direction circonférentielle X étant inférieure ou égale à 20 degrés, en valeur absolue.

Par « agencement globalement circonférentiel » on entend un agencement tel que le rapport de projection Ry/Rx correspond à 0 ≤ Ry/Rx ≤ 0,6.

Par « bande de roulement », on entend la zone du pneumatique dont au moins une partie est soumise à un contact avec le sol et est usée par ce contact avec le sol.

Par « chaque bloc s'étendant de manière continue d'un bord 3 vers le centre 4 », on entend que le bloc n'est pas interrompu par des rainures séparatives séparant ce bloc en différents sous-blocs. Par rainure, on entend une découpure dont les faces de matière ne se touchent pas dans les conditions usuelles de roulage. La largeur d'une rainure est supérieure ou égale à 2 mm. Ainsi,le fait que ces blocs ne soient pas interrompus par des rainures séparatives permet d'améliorer l'évacuation de l'eau du centre 4 vers le bord 3, la présence de telles rainures séparatives pouvant perturber l'écoulement du flux d'eau vers l'extérieur du pneumatique.

Par « courbure globale C du bloc », on entend que le bloc a une forme courbée. Cette courbure peut être constante ou continument variable. Dans une autre variante la courbure est constituée d'une succession de segments.

Par « courbure globale C' de l'incision médiane », on entend que l'incision médiane a une trace courbée. Cette courbure peut être constante ou continument variable. Dans une autre variante la courbure est constituée d'une succession de segments.

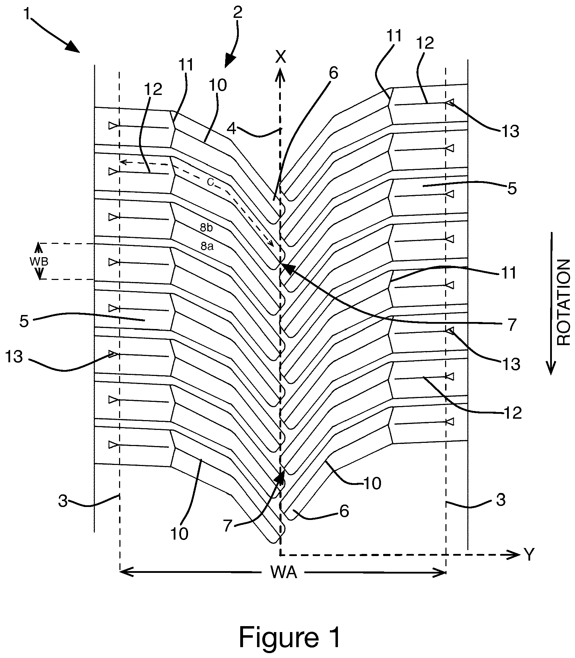

La figure 1 illustre sensiblement l'aire de contact d'une bande de roulement 2 de pneumatique 1. L'aire de contact comporte une largeur maximale WA définie par la norme ETRTO et illustrée sur la figure 1 entre les lignes pointillées délimitées par la largeur WA. La norme ETRTO prévoit une largeur WA = (1.075-0.005ar)*S^{1.001} avec « ar » le rapport nominal d'aspect et S la grosseur du boudin théorique sur la jante de mesure. Les bords latéraux 3 de la bande de roulement sont en correspondance avec les lignes pointillées délimitant la largeur WA.

Selon l'invention, la bande de roulement 2 comprend une pluralité de blocs 5. Chacun des blocs s'étend depuis un bord 3 de la bande de roulement vers l'axe de centre 4 de la bande de roulement en suivant globalement une courbure C. L'expression « vers le centre » signifie ici que le bloc se termine au niveau du centre, ou encore juste avant le centre ou juste après le centre. Le centre 4 est défini par une ligne s'étendant dans la direction circonférentielle et divisant la bande de roulement en deux moitiés. Pour les dimensions larges de pneumatiques, un sillon longitudinal peut être rajouté en ce centre 4.

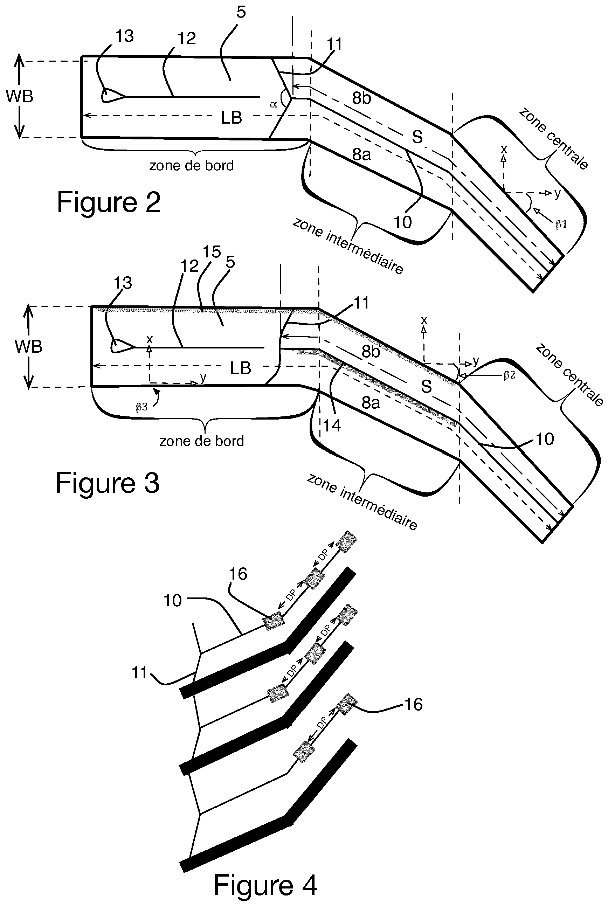

Chacun des blocs est de longueur LB et de largeur WB, cette largeur augmentant de l'extrémité centrale de bloc en direction du bord 3. Les blocs sont avantageusement configurés en trois zones, soit une zone centrale, une zone intermédiaire et une zone de bord. La zone centrale forme un angle β1 par rapport à la direction transversale (Y) compris entre 35° et 65° et plus préférentiellement de sensiblement 50° +-5°. En bordure des blocs, on trouve la zone de bord avec un angle β3 par rapport à la direction transversale (Y) compris entre 0° et 10°. Afin d'assurer une liaison continue entre ces deux zones, la zone intermédiaire est prévue. Cette zone intermédiaire permet d'assurer la liaison entre la zone centrale et la zone de bord avec un angle β2 permettant une continuité entre les trois zones. Du fait de cet agencement en trois zones, les blocs comportent une courbure C, progressive depuis le bord 3 en se dirigeant vers le centre 4. Pour la mise en forme de cette courbure, les côtés des blocs forment, en fonction des cas, soit une ligne courbe continue des bords 3 vers le centre 4, courbure pouvant être variable, soit une pluralité de segments angulés, tel que représentés aux figures 2 et 3. Dans le cas où une zone de bloc est configurée par une succession de segments, l'angle β est l'angle moyen. Dans le cas où une zone de bloc est configurée par un segment curviligne, l'angle β correspond à la moyenne des angles le long de la courbure.

Au moins une partie des blocs 5 comprend une incision médiane 10 s'étendant le long du bloc en suivant une courbure C' similaire à la courbure C du bloc. Cette incision permet de séparer le bloc en deux parties 8a et 8b, de volumes préférentiellement sensiblement identiques. En variante, seulement une partie des blocs 5 comprend une incision médiane 10.

L'incision médiane 10 permet de diminuer la rigidité du bloc 5 en le séparant en deux demi-blocs. La rigidité de chaque demi-bloc est sensiblement identique, contribuant à uniformiser l'usure de ces deux demi-blocs. L'incision médiane 10 comporte une longueur curviligne S. Cette longueur S de l'incision médiane est préférentiellement déterminée de sorte que 0,5.L ≤ S ≤ 0,8.L.

Selon l'invention, au moins une partie des blocs 5 comprend une incision 11 globalement circonférentielle agencée à l'extrémité de l'incision médiane 10. Par « globalement circonférentielle », on entend un agencement tel que le rapport de projection Ry/Rx correspond à 0 ≤ Ry/Rx ≤ 0,6. Cette incision produit un effet de découplage favorisant la mise à plat du pneumatique.

Les exemples des figures 1 et 2 illustrent des incisions globalement circonférentielles 11 en forme de V dont la pointe du V forme un angle α compris entre 100° et 170° et de préférence entre 150° et 170°. Selon les modes de réalisations, la pointe du V peut être orientée soit vers le centre de la bande de roulement, soit vers le bord proximal de la bande de roulement. Une incision en forme de V permet d'améliorer l'adhérence dans les directions longitudinales et transversales.

L'exemple de réalisation de la figure 3 montre un bloc 5 dont l'incision globalement circonférentielle 11 est en forme de « S ». Le profil formé est suffisamment allongé pour que l'incision respecte le critère selon lequel le rapport de projection Ry/Rx est compris entre 0 et 0,6.

Enfin, les blocs 5 prévoient au moins une incision latérale 12, agencée au niveau de la zone de bord de bloc. Cette incision est décalée transversalement par rapport à l'incision médiane 10 et l'incision circonférentielle 11. Le décalage entre cette incision et les autres incisions est de préférence entre 3 et 6 mm. Ce décalage, en augmentant localement la rigidité, contribue à améliorer l'efficacité du freinage sur sol sec.

Préférentiellement, cette incision latérale 12 s'élargit à partir d'une certaine profondeur de sculpture, formant un élargissement 13 d'incision. Cet élargissement 13 d'incision débouche sur l'épaule du pneumatique et forme un profil en forme de goutte d'eau.

De manière avantageuse, les incisions 10, et 12 sont agencées au niveau de la fibre neutre des blocs, c'est-à-dire de façon à séparer les blocs en deux parties de volumes sensiblement identiques.

La profondeur des incisions se situe préférentiellement entre 85% et 105% de la profondeur des rainures délimitant les blocs.

La figure 3 montre également un chanfrein 14 d'incision, prévu au niveau de l'incision médiane 10. Dans l'exemple illustré, le chanfrein 14 d'incision s'étend le long de la zone intermédiaire, puis légèrement au-delà de cette zone sur une portion contigüe de la zone de bord, sensiblement jusqu'à l'incision 11 globalement circonférentielle.

Un chanfrein 15 de bloc, situé au bord de fuite de la zone de bord et de la zone intermédiaire est également montré.

La zone de bord et la zone intermédiaire, du fait de leur faible inclinaison par rapport à la direction transversale Y, sont les plus sensibles au phénomène de basculement lors de fortes sollicitations en freinage. Cette sollicitation induit une surpression sur l'arête du bord de fuite qui, dans certaines conditions, pénalise le freinage. La présence des chanfreins précédemment décrits permet d'atténuer, voire de supprimer, ce phénomène.

La présence de chanfreins sur un trop grand nombre d'arrêtes a pour effet de réduire le volume de matériau à user et d'augmenter le taux d'entaillement surfacique, avec un impact négatif sur le bruit émis par le pneumatique. Pour éviter ces inconvénients, la zone centrale, plus inclinée, est dépourvue de chanfreins. Cette répartition judicieuse des chanfreins permet de restreindre leur utilisation aux zones dans lesquelles ils sont les plus efficaces.

La figure 4 illustre une variante de réalisation comprenant moyens de rigidification 16 tels que des ponts agencés à certaines positions le long de l'incision médiane 10. Ces ponts permettent de réduire fortement la rétention des cailloux dans les incisions. En outre, il a été constaté qu'un espacement DP entre les ponts 16 se situant entre 15 mm à 20 mm permet d'optimiser cet effet de non rétention, sans affecter l'efficacité des lamelles sur sol neigeux. Selon les modes de réalisation envisagés, ce type de disposition permet de prévoir des incisions d'une longueur de l'ordre de 70 mm.

Les blocs de la bande de roulement sont constitués d'une composition élastomère basée sur un élastomère diénique, un système plastifiant et un système d'inter-liaisons, dans lequel la composition élastomère comporte une température de transition vitreuse comprise entre -40°C et -15°C et un module de cisaillement G* mesuré à 60°C compris entre 0,5 MPa et 1,1 MPa.

L'élastomère diénique est sélectionné dans le groupe comportant le caoutchouc naturel, le caoutchouc styrène-butadiène, le caoutchouc synthétique polyisoprène, le caoutchouc polybutadiène et toutes combinaisons entre ces constituants. Le système plastifiant comprend des plastifiants sélectionnés parmi une huile plastifiante, une résine plastifiante ou toute combinaison entre ces constituants.

La résine plastifiante est une résine polylimonène. L'huile plastifiante est sélectionnée parmi une huile à base de pétrole, une huile végétale, ou toute combinaison de ces huiles.

Les Figures et leurs descriptions faites ci-dessus illustrent l'invention plutôt qu'elles ne la limitent. En particulier, l'invention et ses différentes variantes viennent d'être décrites en relation avec un exemple particulier comportant des blocs identiques sur toute la surface de la bande de roulement.

Néanmoins, il est évident pour un homme du métier que l'invention peut être étendue à d'autres modes de réalisation dans lesquels en variantes, on prévoit des blocs non identiques soit le long de l'alignement circonférentiel, soit de part et d'autre de la ligne centrale de la bande de roulement. On peut également prévoir qu'au moins une des extrémités des incisions médianes 10 comprend un pont dans la partie centrale de la bande de roulement et/ou entre l'incision médiane et l'incision circonférentielle.

Les signes de références dans les revendications n'ont aucun caractère limitatif. Les verbes "comprendre" et "comporter" n'excluent pas la présence d'autres éléments que ceux listés dans les revendications.

### Numéros de référence employés sur les figures

- 1: Pneumatique
- 2: Bande de roulement
- 3: Bord de bande de roulement
- 4: Axe de centre de bande de roulement
- 5: Bloc
- 6: Extrémité centrale du bloc
- 7: Paroi d'extrémité centrale du bloc
- 8a: Partie bord d'attaque du bloc
- 8b: Partie bord de fuite du bloc

- 10: Incision médiane
- 11: Incision globalement circonférentielle
- 12: Incision latérale
- 13: Elargissement d'incision dans la profondeur
- 14: Chanfrein d'incision
- 15: Chanfrein de bloc
- 16: Moyens de rigidification

## Revendications

1. Pneumatique (1) comportant une bande de roulement (2) directionnelle, ladite bande de roulement (2) comportant deux bords (3) et un centre (4), cette bande de roulement comprenant une pluralité de blocs (5), chaque bloc s'étendant de manière continue selon une courbure globale C d'un des bords (3) vers le centre (4) de ladite bande de roulement en formant une extrémité centrale (6) de bloc, chaque bloc (5) présentant une largeur WB et une longueur LB, cette largeur augmentant de l'extrémité centrale (6) de bloc en direction du bord (3), **caractérisé en ce que** tout ou partie des blocs (5) de la bande de roulement comprend une incision médiane (10) de longueur S, ladite incision médiane (10) s'étendant selon une courbure C' sensiblement identique à la courbure C du bloc, et **en ce que** chaque bloc (5) comporte une zone centrale avec un angle β1 par rapport à la direction transversale (Y) tel que 35°≤β1≤65° une zone de bord avec un angle β3 tel que 0°≤β3≤10°, et une zone intermédiaire entre la zone centrale et la zone de bord avec un angle β2, et **en ce que** au moins un bloc (5) comprend un chanfrein (15) de bloc prévu au niveau du bord d'attaque et/ou du bord de fuite du bloc de ladite zone intermédiaire et/ou de ladite zone de bord, et **en ce que** ladite zone centrale est dépourvue de chanfrein.

2. Pneumatique selon la revendication 1, dans lequel les chanfreins de bloc sont agencés sur un bord de fuite du bloc.

3. Pneumatique selon la revendication 1 ou 2, dans lequel au moins une partie des incisions médianes (10) comporte un chanfrein (14) d'incision.

4. Pneumatique selon la revendication 3, dans lequel le chanfrein (14) d'incision est localisé dans la zone intermédiaire.

5. Pneumatique selon l'une des revendications précédentes, dans lequel au moins une partie des incisions médianes (10) comprend des moyens de rigidification (16) reliant, pour chaque incision, les faces opposées de cette incision.

6. Pneumatique selon la revendication 5, dans lequel les moyens de rigidification (16) sont agencés dans l'incision selon des intervalles de 5 à 20 mm.

7. Pneumatique selon l'une des revendications 5 ou 6 dans lequel, dans au moins une incision, l'espacement entre les moyens de rigidification (16) est variable.

8. Pneumatique selon l'une des revendications 5 à 7, dans lequel les moyens de rigidification (16) sont venus de matière avec la bande de roulement.

9. Pneumatique selon l'une des revendications 1 à 8, dans lequel les chanfreins forment une paroi inclinée de sensiblement 45° par rapport à la surface de bande de roulement.

10. Pneumatique selon l'une des revendications 1 à 8, dans lequel les chanfreins sont courbes.

11. Pneumatique selon l'une des revendications précédentes, dans laquelle les blocs (7) sont constitués d'une composition élastomère basée sur un élastomère diénique, un système plastifiant et un système d'inter-liaisons, dans lequel la composition élastomère comporte une température de transition vitreuse comprise entre -40°C et -15°C et un module de cisaillement G* mesuré à 60°C compris entre 0,5 MPa et 1,1 MPa.

12. Pneumatique selon la revendication 12, dans laquelle la température de transition vitreuse de la composition élastomère est comprise entre -20°C et - 30°C.

13. Pneumatique selon la revendication 12, dans laquelle le module de cisaillement G* est compris entre 0,9 MPa et 1 MPa.

## Patentansprüche

1. Luftreifen (1), der einen richtungsorientierten Laufstreifen (2) aufweist, wobei der Laufstreifen (2) zwei Ränder (3) und eine Mitte (4) aufweist, wobei dieser Laufstreifen eine Vielzahl von Blöcken (5) enthält, wobei jeder Block sich kontinuierlich gemäß einer globalen Krümmung C von einem der Ränder (3) zur Mitte (4) des Laufstreifens erstreckt, indem er ein zentrales Blockende (6) bildet, wobei jeder Block (5) eine Breite WB und eine Länge LB aufweist, wobei diese Breite vom zentralen Blockende (6) in Richtung des Rands (3) zunimmt, **dadurch gekennzeichnet, dass** alle oder ein Teil der Blöcke (5) des Laufstreifens einen Mitteleinschnitt (10) der Länge S aufweisen, wobei der Mitteleinschnitt (10) sich gemäß einer Krümmung C' im Wesentlichen gleich der Krümmung C des Blocks erstreckt, und dass jeder Block (5) eine zentrale Zone mit einem Winkel β1 bezüglich der Querrichtung (Y), derart, dass gilt 35°≤β1≤65°, eine Randzone mit einem Winkel β3 derart, dass gilt 0°≤β3≤10°, und eine Zwischenzone zwischen der zentralen Zone und der Randzone mit einem Winkel β2 aufweist, und dass mindestens ein Block (5) eine Blockabschrägung (15) enthält, die im Bereich des Vorderkante und/oder der Hinterkante des Blocks der Zwischenzone und/oder der Randzone vorgesehen ist, und dass die zentrale Zone keine Abschrägung aufweist.

2. Luftreifen nach Anspruch 1, wobei die Blockabschrägungen auf einer Hinterkante des Blocks angeordnet sind.

3. Luftreifen nach Anspruch 1 oder 2, wobei mindestens ein Teil der Mitteleinschnitte (10) eine Einschnittabschrägung (14) aufweist.

4. Luftreifen nach Anspruch 3, wobei die Einschnittabschrägung (14) sich in der Zwischenzone befindet.

5. Luftreifen nach einem der vorhergehenden Ansprüche, wobei mindestens ein Teil der Mitteleinschnitte (10) Versteifungseinrichtungen (16) enthält, die für jeden Einschnitt die gegenüberliegenden Seiten dieses Einschnitts verbinden.

6. Luftreifen nach Anspruch 5, wobei die Versteifungseinrichtungen (16) im Einschnitt in Abständen von 5 bis 20 mm angeordnet sind.

7. Luftreifen nach einem der Ansprüche 5 oder 6, wobei in mindestens einem Einschnitt der Abstand zwischen den Versteifungseinrichtungen (16) variabel ist.

8. Luftreifen nach einem der Ansprüche 5 bis 7, wobei die Versteifungseinrichtungen (16) aus einem Material mit dem Laufstreifen bestehen.

9. Luftreifen nach einem der Ansprüche 1 bis 8, wobei die Abschrägungen eine um im Wesentlichen 45° bezüglich der Laufstreifenfläche geneigte Wand bilden.

10. Luftreifen nach einem der Ansprüche 1 bis 8, wobei die Abschrägungen gekrümmt sind.

11. Luftreifen nach einem der vorhergehenden Ansprüche, wobei die Blöcke (7) aus einer Elastomerzusammensetzung basierend auf einem Dienelastomer, einem Weichmachersystem und einem Zwischenverbindungssystem bestehen, wobei die Elastomerzusammensetzung eine Glasübergangstemperatur zwischen -40°C und -15°C und einen Schermodul G* gemessen bei 60°C zwischen 0,5 MPa und 1,1 MPa aufweist.

12. Luftreifen nach Anspruch 12, wobei die Glasübergangstemperatur der Elastomerzusammensetzung zwischen -20°C und -30°C liegt.

13. Luftreifen nach Anspruch 12, wobei der Schermodul G* zwischen 0,9 MPa und 1 MPa liegt.

## Claims

1. Tyre (1) comprising a directional tread (2), said tread (2) comprising two edges (3) and a centre (4), this tread comprising a plurality of blocks (5), each block extending continuously along an overall curvature C from one of the edges (3) towards the centre (4) of said tread, forming a block central end (6), each block (5) having a width WB and a length LB, this width increasing from the block central end (6) in the direction of the edge (3), **characterized in that** all or some of the blocks (5) of the tread comprise a median sipe (10) of length S, said median sipe (10) extending along a curvature C' substantially identical to the curvature C of the block, and **in that** each block comprises a central zone at an angle β1 with respect to the transverse direction (Y) such that 35°≤β1≤65°, an edge zone at an angle β3 such that 0°≤β3≤10°, and an intermediate zone between the central zone and the edge zone at an angle β2, and **in that** at least one block (5) comprises a block chamfer (15) provided at the leading edge and/or the trailing edge of the block in said intermediate zone and/or said edge zone, and **in that** said central zone does not have a chamfer.

2. Tyre according to Claim 1, wherein the block chamfers are arranged on a trailing edge of the block.

3. Tyre according to Claim 1 or 2, wherein at least some of the median sipes (10) comprise a sipe chamfer (14).

4. Tyre according to Claim 3, wherein the sipe chamfer (14) is located in the intermediate zone.

5. Tyre according to one of the preceding claims, wherein at least some of the median sipes (10) comprise stiffening means (16) which connect, for each sipe, the opposite faces of this sipe.

6. Tyre according to Claim 5, wherein the stiffening means (16) are arranged in the sipe at spacings of 5 to 20 mm.

7. Tyre according to either of Claims 5 and 6, wherein, in at least one sipe, the spacing between the stiffening means (16) is variable.

8. Tyre according to one of Claims 5 to 7, wherein the stiffening means (16) are integral with the tread.

9. Tyre according to one of Claims 1 to 8, wherein the chamfers form a wall inclined at approximately 45° with respect to the tread surface.

10. Tyre according to one of Claims 1 to 8, wherein the chamfers are curved.

11. Tyre according to one of the preceding claims, wherein the blocks (7) are made up of an elastomer composition based on a diene elastomer, a plasticizing system and an interlinking system, wherein the elastomer composition has a glass transition temperature of between -40°C and -15°C and a shear modulus G* measured at 60°C of between 0.5 MPa and 1.1 MPa.

12. Tyre according to Claim 12, wherein the glass transition temperature of the elastomer composition is between -20°C and -30°C.

13. Tyre according to Claim 12, wherein the shear modulus G* is between 0.9 MPa and 1 MPa.
